# EUROPEAN PATENT APPLICATION

(11) **EP 2 317 223 A1**
(43) Date of publication of application: **04.05.2011**
(21) Application number: 09174622.2
(22) Date of filing: 30.10.2009
(51) Int. Cl.: F23L 7/00, F23D 1/00, F23M 5/02

(54) **Solid fuel burner**

(71) Applicant: L'AIR LIQUIDE, Société Anonyme pour l'Etude et l'Exploitation des Procédés Georges Claude, 75007 Paris (FR)
(72) Inventor: Belasse, Brenice, 95600, Eaubonne (FR); Mulon, Jacques, 91300, Massy (FR); Panier, Faustine, 78350, Jouy En Josas (FR); Paubel, Xavier, 92290, Chatenay Malabry (FR); Tsiava, Rémi, 91250, Saint Germain les Corbeil (FR)
(74) Representative: De Vleeschauwer, Natalie Y.L.D.

(57) **Abstract**

Burner for conveyor gas propelled particulate solid fuel, said burner comprising a burner block (100) and an injector assembly (200), the injector assembly being at least partially surrounded by an injector passage (130) of the burner block, the injector assembly comprising an inner oxygen supply pipe (210) surrounded by a fuel injector (220), which in turn is surrounded by an oxygen injector (230), each having a downstream end (211,221,231) on the side of the passage outlet (132), the inner oxygen supply pipe having a lateral surface onto which are mounted a set of lateral primary oxygen nozzles (212) for the injection of lateral jets of primary oxygen into the fuel injector with an injection orientation which follows a same sense of rotation around the longitudinal direction and which is directed towards the downstream end of the fuel injector, said lateral primary oxygen nozzles being positioned at a number of different distances from the downstream end of the fuel injector.

## Description

The present invention relates to the field of combustion of particulate solid fuel, such as particulate or powdered coal, and more specifically to the field of oxygen enrichment of the conveying gas of said particulate solid fuel.

Oxygen enrichment has been proposed with a view to improving the efficiency of the combustion process and/or limiting NOx emissions.

Oxygen enrichment of gaseous fuel streams has been successfully practiced in a number of industrial processes, such as glass melting, lime and cement kilns, and steel manufacturing, among many others.

Coal, on the other hand, is the most abundant fossil fuel currently available and most of the power generated in the world uses coal as fuel.

In the case of solid fuel particles a conveying gas is often required to transport the solid fuel particles from a fuel-storage or milling device (e. g. a coal pulverizer) to the burner.

Compared to the oxyen enrichment of gaseous fuel streams, the oxygen enrichment of a particle-laden stream, such as a pulverized coal/air stream, poses additional challenges. These challenges arise due to a number of factors, as described below.

Firstly, oxygen enrichment of such a particle-laden stream creates a flammable or more highly flammable flow within the burner, which must be handled with great care to avoid premature ignition, explosion or other detrimental effects.

Secondly, coal particles usually have a non-uniform particle size distribution. Most coal-fired power plants use a size fraction that ranges from about 75 - 120 µm. Under the influence of gravity, the coal particle trajectories in the particle-laden stream deviate from the gas streamlines. The larger particles deviate more, whereas the smaller particles follow gas streamlines more closely. In addition, a phenomenon known as "rope phenomenon" Is observed in bends in transport conduits. As a result, the particle loading is not uniform across the cross-section of the conduit, and particles may even settle and accumulate at certain points within the conduit.

It is known from WO-A-2006032961 to improve combustion of a mixture of a non-gaseous fuel and conveying gas by means of a system including: 1) a source of a mixture of non-gaseous fuel, in particular a solid fuel, and conveying gas; 2) a source of oxygen; 3) a burner operatively associated with a combustion chamber;
4) a fuel duct in fluid communication with the source of mixed non-gaseous fuel and conveying gas; 5) a tubular oxygen lance fluidly communicating with the source of oxygen; and 6) at least first and second injection elements in fluid communication with the source of oxygen.

The fuel duct of said system includes a portion that extends along an axis towards the burner.

The at least first and second injection elements are configured to inject oxygen into, and mix therewith, a flow of the mixture upstream of, or at, the burner. At least one of the first and second injection elements receives oxygen from the lance. The first and second injection elements are furthermore spaced apart.

Utilizing the system as described above, a mixture of the non-gaseous fuel and the conveying gas is first allowed to flow into the fuel duct. Oxygen is then allowed to flow from the first and second injection devices, such that the oxygen and the mixture of nongaseous fuel and conveying gas are mixed. The thus-mixed oxygen, non- gaseous fuel, and conveying gas are then combusted within the combustion chamber.

Even though the principles of the system as described in WO-A-2006032961 provide for improved mixing of oxygen injected into the stream of mixed non-gaseous fuel and conveying gas, which in turn leads to improved combustion, the practical implementation of this system in an industrial environment has faced a number of difficulties related to the inherent problems of solid fuel combustion.

Indeed, the range of particulate solid fuels for industrial use varies considerably. Even for a specific type of particulate solid fuel, such as pulverized coal, parameters such as average particle size, particle size distribution, composition, including humidity, volatile matter content, bound nitrogen content, etc. can be very different from one batch of solid fuel to another, each of which has an impact on the behaviour of the solid fuel in the combustion process.

A major disadvantage of the system known from WO-A-2006032961, is its lack of flexibility. Indeed, a different optimised system needs to be designed and produced for each specific particulate solid fuel. This significantly increases the cost of the system and makes the system unsuitable for combustion processes using particulate solid fuels of varying particle size and composition.

A further disadvantage of the system known from WO-A-2006032961 is its relatively high maintenance cost. Indeed, particle-laden streams, such as a pulverized coal/air streams, are highly abrasive and cause any elements, such as oxygen lances and injectors protruding into the particle-laden stream to suffer significant wear, ultimately leading to malfunction and therefore a substantial risk of premature ignition and explosion. In order to prevent this from occurring, it is necessary, with the system known from WO-A-2006032961, regularly to replace at least the entire oxygen-enrichment structure which is present inside the fuel duct and which is therefore subject to abrasion.

It is an aim of the present invention to provide an improved burner suitable for the practical implementation in an industrial environment of the principle of multiple spaced apart oxygen injections into a mixture of conveying gas and particulate solid fuel upstream of the combustion chamber.

In accordance with the present invention, a burner is provided which comprises a burner block and an injector assembly.

The burner block, which is usually made of ceramic refractory material, has an inlet face and an outlet face. An injector passage extends through the burner block in a longitudinal direction (hereafter referred to as D1) from a passage inlet in the inlet face to a passage outlet in the outlet face.

The injector assembly is usually made of metal with suitable heat and corrosion resistance properties and is at least partially surrounded by the injector passage. The injector assembly comprises: an inner oxygen supply pipe, a fuel injector and an oxygen injector, each having a downstream end on the side of the passage outlet.

The fuel injector has a fuel injection nozzle at its downstream end for injecting particulate solid fuel propelled by a conveyor gas towards the passage outlet. The fuel injector further surrounds the inner oxygen supply pipe in the vicinity of the downstream end of the latter.

The oxygen injector surrounds the fuel injector in the vicinity of its < i.e. the oxygen injector's > downstream end, or, in other words, the downstream end of the oxygen injector surrounds the fuel injector. The oxygen injector also has an oxygen injector nozzle at its downstream end for injecting secondary oxygen around the fuel injector and towards the passage outlet.

The inner oxygen supply pipe has a lateral surface onto which are mounted a set of lateral primary oxygen nozzles. These lateral primary oxygen nozzles are intended for the injection of lateral jets of primary oxygen into the fuel injector, which, as indicated above, surrounds the inner oxygen supply pipe in the vicinity of its downstream end. The lateral primary oxygen nozzles are positioned at a number of different distances from the downstream end of the fuel injector, whereby said distances are measured in the above-mentioned longitudinal direction D1. The lateral primary oxygen nozzles have an injection opening oriented for the injection of these lateral jets of primary oxygen with an injection orientation which follows a same sense of rotation (i.e. either clockwise or counterclockwise) around longitudinal direction D1, said orientation being furthermore directed towards the downstream end of the fuel injector, i.e. towards the injector passage outlet.

The lateral primary oxygen nozzles advantageously have an injection opening oriented for the injection of a lateral jet of primary oxygen with an injection orientation substantially tangential to the lateral surface of the inner oxygen supply pipe. In particular, the injection opening of the lateral primary injection nozzles can usefully be oriented for the injection of a lateral jet of primary oxygen with an injection orientation which forms an angle α between 20 and 70 with longitudinal direction D1.The lateral primary oxygen injection nozzles are preferably so that said angle α with longitudinal direction D 1 corresponds to or is close to a predetermined angle θ(i.e. an angle θ with a predetermined value) so that the angle α falls within a range of [θ - 10° , θ + 10°].

The burner according to the invention advantageously comprises means for mounting the inner oxygen supply pipe into the fuel injector and for removing the inner oxygen supply pipe from the fuel injector, preferably for mounting and removing the inner oxygen supply pipe on the side of the inlet face of the block, i.e. on the so-called 'cold side' of the block.

A fuel supply pipe of the burner supplies particulate solid fuel propelled by conveyor gas to the fuel injector.

Said fuel supply pipe generally forms or defines an elbow or bent portion upstream of the fuel injector. In that case the burner preferably comprises a branch pipe in line with the fuel injector and mounted on the fuel supply pipe in said elbow. The inner oxygen supply pipe can then be mounted into the fuel injector and can be removed from the fuel injector through said branch pipe.

The burner is advantageously equipped with means for mounting the lateral primary oxygen nozzles onto the lateral surface of the inner oxygen supply pipe and for removing the lateral primary oxygen nozzles from the lateral surface of the inner oxygen supply pipe. Such means are typically openings or perforations into the lateral wall of the inner oxygen supply pipe into which the lateral primary oxygen nozzles can be fitted with the desired orientation. The number of openings may exceed the number of lateral primary oxygen nozzles, in which case the openings without such a nozzle are blocked off, for example with a removable plug, whereby said removable plug is advantageously substantially flush with the lateral surface of the inner oxygen supply pipe. The means for mounting the lateral primary oxygen nozzles onto the lateral surface of the inner oxygen supply pipe advantageously comprise a locking mechanism for locking the lateral primary oxygen nozzles onto the lateral surface of the inner oxygen supply pipe with a predetermined orientation of the injection opening, for example by screwing or clicking said nozzles into place in said openings, whereby the nozzle-receiving part of the opening and the part of the nozzle entering said opening have a corresponding shape.

The lateral primary oxygen nozzles can be positioned at a number of different radial angles around the lateral surface of the inner oxygen supply pipe.

According to a particularly advantageous embodiment of the present invention, the inner oxygen supply pipe further comprises a terminal primary oxygen nozzle at its downstream end through which primary oxygen can also be injected. The terminal primary oxygen nozzle may in particular be adapted for the injection of primary oxygen towards the passage outlet in the longitudinal direction D1. According to a particularly useful embodiment, the inner oxygen supply pipe comprises a central lance and a surrounding annular passage. The central lance terminates in the terminal primary oxygen nozzle with which it is in fluid connection. The surrounding annular passage is situated between the lateral surface of the inner oxygen supply pipe and the central lance and is in fluid connection with the lateral primary oxygen nozzles. In order to distribute the primary oxygen between, on the one hand, the central lance/the terminal primary oxygen nozzle and, on the other hand, the surrounding annular passage/the lateral primary oxygen nozzles, the burner preferably includes an oxygen distributor, whereby said oxygen distributor is in separate fluid connection with the central lance and with the surrounding annular passage. The oxygen distributor comprises means for connecting it to an oxygen source. The oxygen distributor is further adapted for controlling the ratio between the primary oxygen flow into the central lance and into the surrounding annular passage.

A swirler may be mounted in the fuel injector, typically at or proximate the fuel injection nozzle, and is preferably mounted around the inner oxygen supply pipe. Such swirlers are known in the art and are used to create turbulence in the fluid, in ***casu*** in the conveyor gas loaded with particulate solid fuel. When the swirler corresponds to a device exposed to the particulate solid fuel propelled by the conveyor gas, the burner is preferably equipped for mounting the swirler into the fuel injector and for removing the swirler from the fuel injector together with the inner oxygen supply pipe or after the inner oxygen supply pipe has been removed from the fuel injector.

According to an embodiment of the invention, the injector passage widens downstream of the downstream ends respectively of the inner oxygen supply pipe, of the fuel injector and of the secondary oxygen injector. A wider precombustion section is thereby created in the injector passage proximate the passage outlet. In that case, the downstream ends of the inner oxygen supply pipe and of the fuel injector are preferably positioned upstream of the passage outlet at the start of the wider precombustion section or proximate and upstream of said wider precombustion section. The downstream end of the oxygen injector may also be positioned at this point, but is usefully positioned further upstream in the injector passage.

Alternatively, the injector passage may be substantially cylindrical, in which case the downstream ends of the inner oxygen supply pipe, of the fuel injector and of the oxygen injector are advantageously positioned upstream of the passage outlet.

As already indicated above, the downstream end of the oxygen injector can be positioned upstream of the downstream end of the fuel injector.

The present invention also relates to a furnace having furnace walls defining a combustion chamber, and whereby at least one burner according to any one of the embodiments described above is mounted in a furnace wall so that the outlet face of the burner block faces the combustion chamber and so that the inlet face of the burner block is accessible from outside the combustion chamber.

The present invention relates in particular to tunnel kilns and furnaces, passage kilns, boilers, rotary kilns and furnaces and tunnel furnaces.

The present invention further relates to the use of a burner according to any one of the embodiments described above for combusting particulate solid fuel in a combustion zone of a furnace to produce heat therein. The particulate solid fuel is preferably pulverized coal, but may also be a different particulate solid fuel such as pet coke, particulate biomass, etc.

The invention can in particular be advantageously used in a furnace for the production of hydraulically setting binder, such as cement lime or plaster..

The primary oxygen advantageously has an oxygen content of at least 75%vol, preferably of at least 85%vol and more preferably of at least 90%vol. The secondary oxygen may be air, but preferably has a higher oxygen content as described hereabove with respect to the primary oxygen.

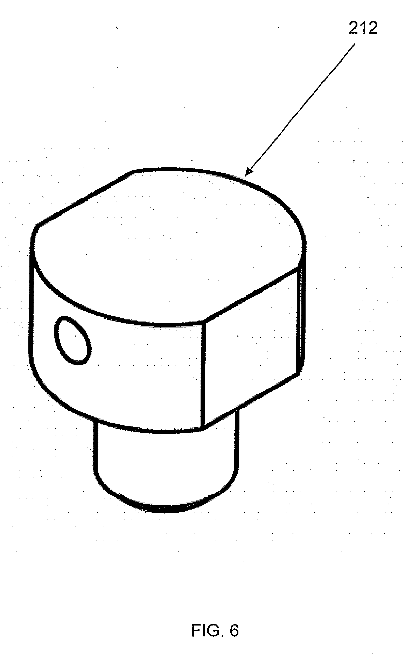

The present invention and its advantages can be more readily understood from the following description by way of examples of specific embodiments, reference being made to enclosed figures 1 to 7.
Figure 1 shows a schematic perspective view of an embodiment of the burner according to the present invention.
Figure 2 is a schematic side view of the burner of figure 1.
Figure 3 is a schematic cross section according to plane A-A of the burner of figures 1 and 2.
Figure 4 is a schematic cross section according to plane A-A of the inner oxygen supply pipe of said burner.
Figure 5 is a schematic front elevation view of the burner of figures 1 and 2.
Figure 6 is a schematic perspective view of a lateral primary oxygen nozzle
Figure 7 is a schematic cross section of the downstream end of an alternative embodiment of a burner according to the present invention.

The illustrated burners of the present invention comprise a burner block 100 and an injector assembly 200.

The burner block 100 has an inlet face 110 and an outlet face 120. The block further presents an injector passage 130 extending through the burner block from the inlet face 110 to the outlet face 120.

The injector passage 130 has a passage inlet 131 in the inlet face 110 and a passage outlet 132 in the outlet face 120.

In use, the burner block 100 is mounted or incorporated in the walls of a combustion chamber, so that the outlet face 120 faces the combustion zone inside the combustion chamber whereas the inlet face 110 faces outwards of the furnace and is generally accessible from outside the combustion chamber for burner control, maintenance and repair.

The burner block 100 is generally made of refractory materials, in particular of ceramic refractory materials.

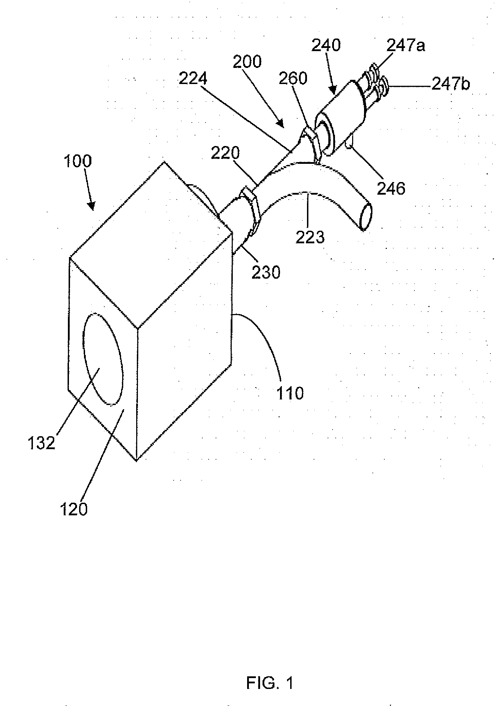

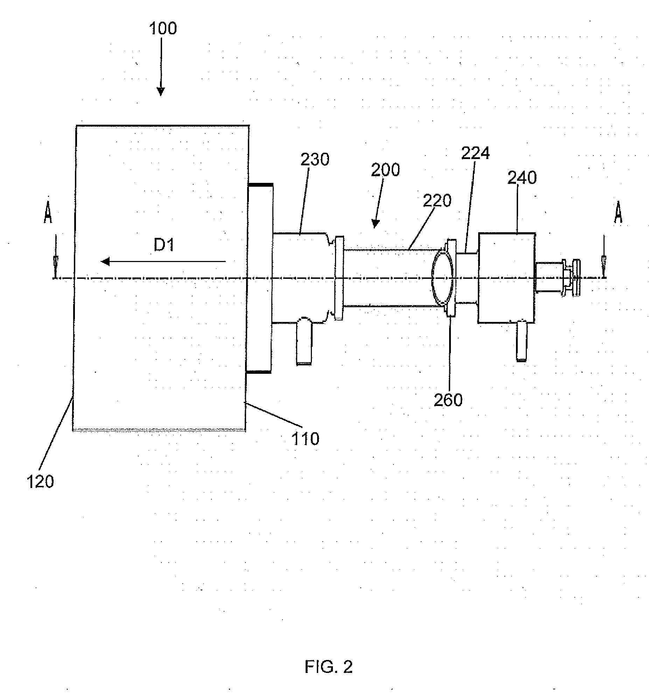

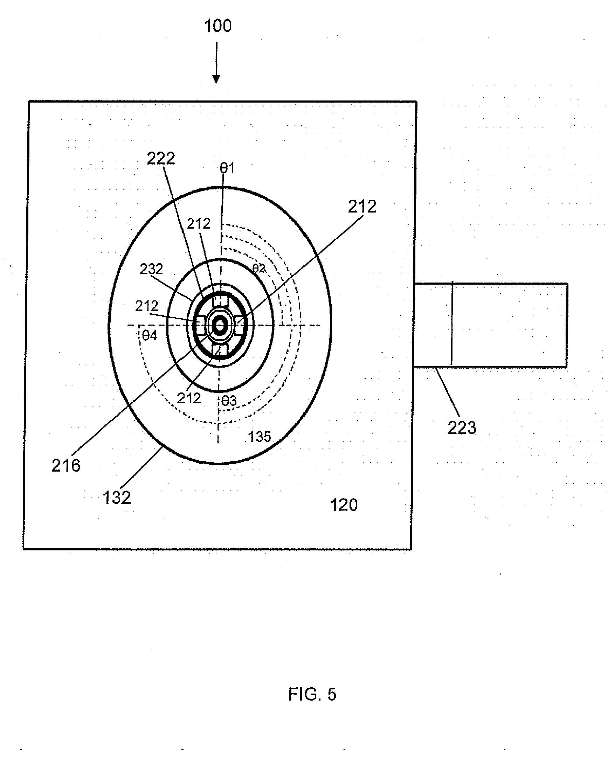

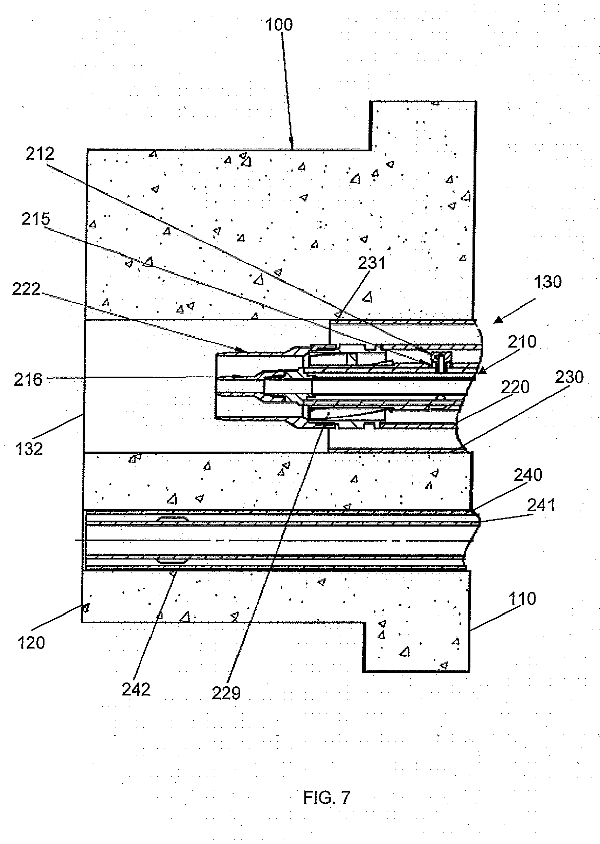

In the embodiment illustrated in figures 1 to 5, the injector passage 130 comprises a wider precombustion section 135 in the vicinity of the passage outlet 132. In the embodiment illustrated in figure 7, on the other hand, injector passage 130 has a substantially constant diameter and does not include a wider precombustion section.

In the embodiment of figures 1 to 4 the burner block 100 is an assembly of two parts of refractory material 136 and 137. Inlet face 110 comprises several facets 110a, 110b and 110c. The length of the precombustion section (in longitudinal direction D1) is determined by the relative position of the two parts 136, 137 of refractory material. In the embodiment of figure 7, the burner block is integrally made out of a single piece of refractory material. The inlet face 110 is a plain surface.

The injector assembly 200 comprises an inner oxygen supply pipe 210, a fuel injector 220 and an oxygen injector 230.

The downstream ends 211, 221 and 231 of respectively the inner oxygen supply pipe 210, the fuel injector 220 and the oxygen injector 230 are all positioned within the injector passage 130 of the burner block 100.Fuel injector 220 has a fuel injection nozzle 222 at its downstream end 221 and surrounds the inner oxygen supply pipe 210 at least in the vicinity of the downstream end 211 of said inner oxygen supply pipe so as to create a flow of particulate solid fuel propelled by a conveyor gas around the inner oxygen supply pipe 210 and directed towards the passage outlet 132 for injection therefrom into the combustion zone.

In the illustrated embodiments fuel injection nozzle 222 is a separate piece mounted on the downstream end 221 of the fuel injector 220.

A swirler 229 is mounted in fuel injector 220 near its downstream end 221. Said swirler 229 surrounds the inner oxygen supply pipe 210.

Oxygen injector 230 has a secondary oxygen nozzle 232 at its downstream end 231 for the injection of the secondary oxygen. The oxygen injector 230 surrounds the fuel injector 220, at least in the vicinity of the downstream end 231 of the oxygen injector 230.

In use, the oxygen injector 230 thus provides a flow of secondary oxygen around the fuel injector 220 and towards the passage outlet 132 for injection therefrom into the combustion zone, via the wider precombustion section 135 of the injector passage 130, when such a wider precombustion section is present.

In the illustrated embodiments, the secondary oxygen nozzle 232 is integrally formed with the downstream 231 of the oxygen injector 230, Alternative embodiments may have a separately formed secondary oxygen nozzle mounted on said downstream end 231.

In the illustrated embodiments, the downstream end 231 of the oxygen injector 230 is positioned further away from the passage outlet 132 than the downstream end 211 and 221 of respectively the inner oxygen supply pipe 210 and the fuel injector 220.

The downstream end 231 of the oxygen injector may be positioned closer to downstream ends 211 and 221 but preferably does not extend beyond said downstream ends 211 and 221.

In the vicinity of its downstream end 211, the inner oxygen supply pipe 210 is positioned centrally within fuel injector 220.

A number of lateral primary oxygen nozzles 212 are mounted on the lateral surface of inner oxygen supply pipe 210, by means of perforations 215 in said lateral surface. These lateral primary oxygen nozzles and the corresponding perforations 215 are positioned at different distances from the downstream end 211 of the inner oxygen supply pipe 210.

In use, these lateral primary oxygen nozzles 212 inject oxygen into the fuel injector body thereby progressively enriching the conveyor gas as it projects the particulate solid fuel towards the fuel injection nozzle 222 and the passage outlet 132.

The lateral primary oxygen nozzles 212 have an injection opening orientated so as to inject primary oxygen into fuel injector 220 with an oxygen injection direction towards the passage outlet 132, substantially tangential to the lateral surface of the oxygen supply pipe and forming an angle α with the longitudinal direction D1 of the injector passage 130. It will be appreciated that the angle α corresponds to the initial direction of the lateral primary oxygen jet as it leaves the injector opening and that thereafter:
(1) the direction of the primary oxygen jet will change under the influence of the flow in the fuel injector of the particulate solid fuel propelled by the conveyor gas,
(2) the primary oxygen thus injected will rapidly mix with and enrich said conveyor gas.

The specific injection orientation of the lateral primary injection nozzles 212 permits, not only to progressively enrich the conveyor gas with oxygen, but it does so without causing a substantial increase in pressure drop over the fuel injector 220 or even without any additional pressure drop over the fuel injector 220, and this despite the fact that the lateral primary oxygen nozzles 212 extend into the path of the particulate solid fuel propelled by the conveyor gas.

The injection orientation of the lateral primary oxygen nozzles 212 furthermore prevents, limits or removes any substantial deposits of particulate solid fuel that may occur or have occurred inside the fuel injector 220 and thus provide for a more homogeneous distribution of the particulate solid fuel across the cross section of the fuel injector 220. It is speculated that the projection of the lateral primary oxygen nozzles 212 into the path of the particulate solid fuel may in fact contribute to limiting or preventing substantial solid fuel deposits, due to the turbulence they create.

In the illustrated examples, the angle α is the same for all lateral primary injection nozzles.

In some specific cases, it may be necessary to have different angles α for different lateral primary injection nozzles in order to achieve a better, i.e. more homogeneous, particulate solid fuel distribution in the fuel injector 220.

The longitudinal profile of progressive oxygen-enrichment of the conveyor gas as it flows through the fuel injector is determined by:
(1) the longitudinal position of the lateral primary oxygen nozzles 212 (distance with respect to the downstream end 211 of the inner oxygen supply pipe 210 or distance with respect to the downstream end 221 of the fuel injector 220), and by
(2) the injection opening of the respective lateral primary oxygen nozzles 212, the cross section of which determines the fraction of the primary oxygen supplied to the inner oxygen supply pipe 210 which is injected through the individual nozzles 212 (a smaller injection opening will restrict the flow of primary oxygen thereto compared to a wider injection opening).

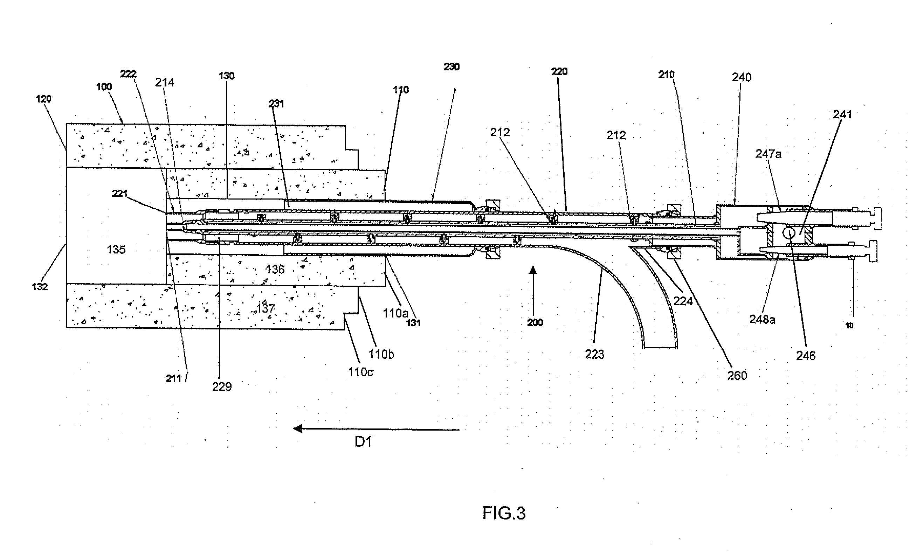

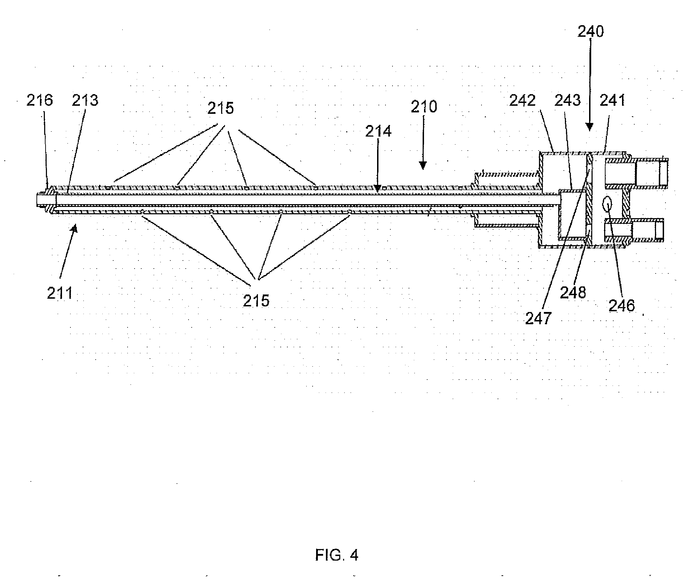

As shown in figures 3, 4 and 5, the lateral primary oxygen nozzles 212 and the corresponding perforations are also positioned in different radial positions (shown in figure 4 as the clockwise angles θ1 = 0°, θ2 = 90°, θ= 180° and θ= 270° formed with the upward vertical direction). The radial position of the lateral primary oxygen nozzles 212 can be optimized to prevent the occurrence of solid fuel deposits and of fuel-rich and fuel-lean zones or corridors in the fuel injector 220, in particular at the downstream end thereof.

For example, where the likelihood of settling of particulate solid fuel is high, more lateral primary oxygen nozzles 212 may be positioned so as to inject primary oxygen jets underneath the inner oxygen supply pipe 210, and possibly also across the top of the inner oxygen supply pipe where the occurrence of fuel deposits is most likely.

In the illustrated embodiments, the inner oxygen supply pipe 210 further comprises a central oxygen lance 213 which terminates in a terminal primary oxygen nozzle 216. In the illustrated embodiments, the terminal nozzle 216 of the central oxygen lance 213 injects primary oxygen in the longitudinal direction **D1** of the injector passage towards the passage outlet. Other terminal oxygen injection nozzles may also be envisaged for the central oxygen lance, possibly with different injection orientations or configurations.

An annular passage 214, surrounding the central oxygen lance 213 is formed between the oxygen lance and the lateral surface of the inner oxygen supply pipe 210, the lateral primary oxygen nozzles 212 being in fluid communication with said annular passage 214 via perforations 215.

The fuel injector 220 is in fluid connection with a fuel supply line comprising an elbow 223 upstream of the fuel injector 220. Branch pipe 224 is mounted on the fuel supply line at said elbow 223 and extends in line with the fuel injector 220.

Inner oxygen supply pipe 210 extends from said branch pipe 224 into the fuel injector 220.

Oxygen distributor 240 is positioned at the upstream end of the inner oxygen supply pipe 210. The oxygen distributor 240 comprises an inlet chamber 241 and two outlet chambers 242, 243. In use, the inlet chamber 241 is connected to a source of primary oxygen via inlet opening 246. The first outlet chamber 242 is in fluid connection with the surrounding annular passage214 of the inner oxygen supply pipe 210. The second outlet chamber 243 is in fluid connection with the central oxygen lance 213. The inlet chamber 241 communicates with the first outlet chamber 242 via first passage 247. The inlet chamber 241 communicates with the second outlet chamber 243 via second passage 248. The oxygen distributor 240 further comprises first and second means 247a and 248a for restricting the flow of primary oxygen through respectively the first and second passage 247 and 248 into respectively the first and second outlet chamber 242 and 243 and consequently for restricting the flow of primary oxygen to respectively the surrounding annular passage 214 and the central oxygen lance 213. Flow restriction can in particular be achieved by manually or automatically restricting the free cross section area of the first, respectively second passage. In the particularly resilient illustrated embodiments first screw 247a and second screw 248a are used as respectively the first and second means for restricting the flow of primary oxygen. Alternative embodiments include diaphragms and other adjustable valves.

In use, primary oxygen flows from a source of primary oxygen into the inlet chamber 241 of oxygen distributor 240 via inlet opening 246. Said flow of primary oxygen is then divided over the first and second outlet chambers 242 and 243 at a ratio determined by the settings of the first and second means for restricting the flow of primary oxygen. Thereafter, the primary oxygen flows from the first outlet chamber 242 to the central oxygen lance 213, and then to the terminal nozzle 216 and from the second outlet chamber 243 to the surrounding annular passage 214 and then to the lateral primary oxygen nozzles 212.

According to an alternative embodiment (not illustrated), the first outlet chamber (which is in fluid connection with the surrounding annular passage and via this passage with the lateral nozzles) also functions as the inlet chamber, i.e. primary oxygen is supplied from the source of primary oxygen via an inlet to the first outlet chamber. Said first outlet chamber is in fluid connection with the second outlet chamber (which is in fluid connection with the inner oxygen lance and via the inner oxygen lance with the longitudinal nozzle) by means of a connecting passage. The oxygen distributor further comprises a means for restricting the flow of primary oxygen from the first outlet chamber (inlet chamber) to the second outlet chamber. The ratio of:
(a) the flow of primary oxygen flowing from said first outlet chamber to the second outlet chamber and then into the central oxygen lance
   to
(b) the flow of primary oxygen flowing from said first outlet chamber directly into the annular passage and onto the lateral nozzles is, in this (not illustrated) embodiment, determined by the setting of said restriction means. This particular embodiment also allows to use the restriction means to inject the primary oxygen only through the lateral primary nozzles (when the connecting passage between the two outlet chambers is completely closed).

The injector assembly is mounted onto the inlet face 110 of the burner block 100 by means of a bracket (not shown) so that the part of the injector assembly downstream of said inlet face is positioned within the injector passage 130 of the block. The inner oxygen supply pipe 210 is detachably connected to the rest of the injector assembly 200 by means of connector 260. Connector 260 is readily accessible and is positioned on the 'cold' side of the burner. In this manner, the inner oxygen supply pipe 210 can be removed from the fuel injector 220 for verification and maintenance or replacement from outside furnace, i.e. from outside the combustion zone. This is furthermore possible without having to close down the furnace. This is particularly important in furnaces equipped with a large number of burners for which burner maintenance is a highly time-consuming process and for which interrupting production or closing down the furnace would be economically crippling.

When the inner oxygen supply pipe 210 is thus removed from within the fuel injector 220, the lateral primary oxygen nozzles 212 (as well as any other nozzles or parts present on the inner oxygen supply pipe, such as the terminal primary oxygen nozzle 216) can be cleaned or replaced with an identical nozzle (for example, when an existing nozzle is damaged due to the abrasive effect of the particulate solid fuel). It is also possible to replace existing nozzles with different nozzles (for example with nozzles having a different injection opening so as to change the relative flow of primary oxygen through the lateral nozzle in a given position on the lateral surface of the inner oxygen supply pipe or with nozzles with a different injection direction) or to replace existing nozzles with plugs, which are preferably flush with the lateral surface of the inner oxygen supply pipe 210, or vice versa.

The burner according to the present invention is thus highly flexible and can be adapted to the requirements for the combustion of different particulate solid fuels or different qualities of such fuel (particle size, volatiles content, etc.) as well as to changes in the operation conditions of the furnace (overall or local energy requirements) by changing the degree and profile of oxygen enrichment of the conveyor gas along the fuel injector, the position and orientation of the lateral primary oxygen nozzles 212, etc.

A major advantage of the present invention is its flexibility. Indeed, the burner of the invention is highly adaptable. The burner can be used over a wide power range by adapting the flows of conveyor gas propelled fuel and of primary and secondary oxygen. The burner can be used with different concentrations of particulate solid fuel in the conveyor gas. More significantly, the burner of the invention can be used for different types of particulate solid fuel, such as fuels with different average particle sizes, fuels with different particle size distributions and chemically or physically different particulate solid fuels, including fuels with different combustible volatile contents or different ash contents, fuels with different levels of humidity, pulverized coal, pet coke, ground waste, etc.

It is a particular advantage of the present invention that a single burner can be used for such a wide range of combustion parameters and fuel types. Indeed, with the burners of the present invention, the flow rates of conveyor gas propelled particulate solid fuel, of primary oxygen and of secondary oxygen can be controlled, thereby regulating inter alia the level of oxygen enrichment in the conveyor gas propelled particulate solid fuel, while, furthermore, the profile of said oxygen enrichment along the fuel injector can be adjusted by merely changing the inner oxygen supply pipe or by changing the number and/or the position and/or design of the lateral primary oxygen nozzles, inner oxygen supply pipe of the burner.

Furthermore, the present invention also makes it possible to take into account different entrainment flow behaviours of the solid particulate fuel in a conveyor gas (for example due to the different particle sizes or particle densities). Particle settlement or roping can thus be countered by a suitable selection of lateral primary oxygen nozzle numbers, positions, injection orientations, etc.

As further highly relevant advantage of the present invention is its easy and low-cost maintenance.

Burner maintenance is an important issue, in particular with respect to particulate solid fuel burners, due to the abrasive effect of the gas-propelled particles on the injectors. The wear caused by such particles can ultimately lead to the perforation of injector walls and consequent risk of explosion, etc.

With the embodiment of the present invention, whereby the inner oxygen supply pipe can be removed from the injector while the remainder of the injector assembly remains in position in the burner block, and in particular when the inner oxygen supply pipe can thus be removed on the "cold" side of the inlet face of the block, safety checks and maintenance of the primary injection nozzles, which are at particularly high risk of erosion, can be conducted easily and rapidly, and if the need arises, the inner oxygen supply pipe can be replaced in order to maintain operational safety.

Furthermore, with the embodiment of the present invention, whereby the lateral primary oxygen nozzles can be removed from the lateral surface of the inner oxygen supply pipe in order to have them replaced by other lateral primary oxygen nozzles or plugs, as the case may be, it is not actually necessary even to replace the inner oxygen supply pipe in case of increased risk due to erosion. Instead, it may be sufficient merely to replace those lateral primary oxygen nozzles that have suffered significant erosion on the existing inner oxygen supply pipe and thereafter to reinsert the inner oxygen supply pipe into the injector passage as described above.

Naturally, a similar procedure may be followed in order to replace or modify the inner oxygen supply pipe so as to adapt same to change in combustion process parameters and in particular when changes are made to the conveyor gas propelled particulate solid fuel.

Due to the nature of particulate solid fuel, the temperature in the combustion chamber must be sufficiently high for said fuel to combust. Cold starting a furnace with particulate solid fuel is therefore not possible.

In order to overcome this difficulty, the solid fuel burner can be equipped with an auxiliary injector assembly comprising (a) an auxiliary oxidizer injector 240 and an auxiliary fuel injector 241, whereby said auxiliary fuel injector is connected to a source of gaseous or liquid fuel, preferably a source of gaseous fuel.

Burner block 100 may comprise an auxiliary injector passage 242 extending between the inlet face 110 and the outlet face 120 and into which the auxiliary injector assembly is mounted so as to inject oxidizer and liquid or gaseous fuel into the combustion chamber for combustion. A suitable position for the outlet opening of such an auxiliary injector passage is shown in figure 7.

During a cold start-up of the furnace, the burner is initially operated using the auxiliary injector assembly to produce combustion of said gaseous or liquid fuel so as to raise the temperature within the furnace. When the temperature within the combustion chamber reaches at least the minimum temperature required for combusting the particulate solid fuel, the burner is operated using the particulate solid fuel injector assembly to produce combustion of said solid fuel and the auxiliary injector assembly is deactivated.

Although the use of an auxiliary injector assembly is described herein with reference to the specific burner of the present invention, such an auxiliary injector assembly can also advantageously be incorporated in other particulate solid fuel burners.

### Example

In a furnace comprising a combustion chamber defined by furnace walls, several burners blocks of burners according to the present invention are mounted so that the outlet face of the burner block faces the combustion chamber and is flush with the furnace wall in which it is mounted and so that the inlet face of the block faces away from the combustion chamber.

An oxygen injector and a fuel injector are mounted into the injector passage of the burners block as described hereabove. The oxygen injector is connected to an oxygen source and the fuel injector is connected to a source of conveyor gas propelled particulate solid fuel.

Lateral primary oxygen injection nozzles are mounted on the inner oxygen supply pipe of each of the burners in a predetermined number, in predetermined axial and radial positions along the inner oxygen supply pipe, with predetermined injection orientations. These parameters may have determined through earlier tests and/or through modelling.

The lateral primary oxygen injection nozzles are mounted on the inner oxygen supply pipe by means of matching perforations or openings in the lateral wall of said pipe. Any such perforations not occupied by a lateral primary oxygen nozzle are blocked of with an equally matching plug which is flush with the lateral surface of the pipe.

The inner oxygen supply pipe is then mounted into the fuel injector in the injector passage and is connected to a source of primary oxygen.

When, as described above, the inner oxygen supply pipe comprises a central oxygen lance and an annular passage surrounding same, both the central oxygen lance and the annular passage are connected to such a source of primary oxygen.

In operation, one or more control means regulate the respective flows to the burner of conveyor gas propelled particulate fuel, of primary oxygen and of secondary oxygen, whereby the control means may further regulate the flow of primary oxygen to respectively the central oxygen lance and the surrounding annular passage.

If the temperature inside the combustion chamber is sufficiently high, the assembled burner can immediately be used for the combustion of particulate solid fuel such as powdered coal.

If, however, the burner is assembled in preparation for a cold start of the furnace, the combustion chamber is typically first heated to a sufficiently high temperature by means of one or more gaseous or liquid fuel burners, which may be separate or integrated into a burner according to the invention, prior to the case of the burner for the combustion of particulate solid fuel.

## Claims

1. Burner comprising a burner block (100) and an injector assembly (200),
- the block (100) having an inlet face (110) and an outlet face (120) and an injector passage (130) extending in a longitudinal direction D1 from a passage inlet (131) in the inlet face (110) to a passage outlet (132) in the outlet face (120),
- the injector assembly (200) being at least partially surrounded by the injector passage (130) and comprising an inner oxygen supply pipe (210), a fuel injector (220) and an oxygen injector (230), each having a downstream end (211, 221, 231) on the side of the passage outlet (132),
o the fuel injector (220):
■ having a fuel injection nozzle (222) at its downstream end (221) for injecting particulate solid fuel propelled by a conveyor gas towards the passage outlet (132) and
■ surrounding the inner oxygen supply pipe (210) in the vicinity of the downstream end (211) of the inner oxygen supply pipe (210),
o the oxygen injector (230):
■ having an oxygen injector nozzle at its downstream end (231) for injecting secondary oxygen towards the passage outlet (132 ) and
■ surrounding the fuel injector (220) in the vicinity of the downstream end (231) of the oxygen injector (230),
whereby the inner oxygen supply pipe (210) has a lateral surface onto which are mounted a set of lateral primary oxygen nozzles (212) for the injection of lateral jets of primary oxygen into the fuel injector (220), whereby said lateral primary oxygen nozzles (212):
■ are positioned at a number of different distances, measured in the longitudinal direction D1, from the downstream end (221) of the fuel injector (220) and
■ have an injection opening oriented for the injection of said lateral jets of primary oxygen with an injection orientation which follows a same sense of rotation around longitudinal direction D1 and which is directed towards the downstream end (221) of the fuel injector (220).

2. Burner according to claim 1, whereby the lateral primary oxygen nozzles (212) have an injection opening oriented for the injection of a lateral jet of primary oxygen with an injection orientation substantially tangential to the lateral surface of the inner oxygen supply pipe (210).

3. Burner according to any one of the preceding claims, comprising means for mounting the inner oxygen supply pipe (210) into the fuel injector (220) and for removing the inner oxygen supply pipe (210) from the fuel injector (220).

4. Burner according to claim 3, comprising means for mounting the inner oxygen supply pipe (210) into the fuel injector (220) and for removing the inner oxygen supply pipe (210) from the fuel injector (220) on the side of the inlet face (110) of the block (100).

5. Burner according to claim 4, further comprising a fuel supply pipe for supplying particulate solid fuel propelled by conveyor gas to the fuel injector (220), said fuel supply pipe defining an elbow (223) upstream of the fuel injector (220), the burner comprising a branch pipe (224) in line with the fuel injector (220) and mounted on the fuel supply pipe in said elbow (223) and through which the inner oxygen supply pipe (210) can be mounted into the fuel injector (220) and can be removed from the fuel injector (220).

6. Burner according to any one of the preceding claims, comprising means for mounting the lateral primary oxygen nozzles (212) onto the lateral surface of the inner oxygen supply pipe (210) and for removing the lateral primary oxygen nozzles (212) from the lateral surface of the inner oxygen supply pipe (210).

7. Burner according to any one of the preceding claims, whereby said lateral primary oxygen nozzles (212) are positioned at a number of different radial angles (θ₁, θ₂, θ₃, θ₄) around the lateral surface of the inner oxygen supply pipe (210).

8. Burner according to any one of the preceding claims, whereby the inner oxygen supply pipe (210) further comprises a terminal primary oxygen nozzle (216) at its downstream end (211) for injecting primary oxygen.

9. Burner according to claim 8, whereby the oxygen supply pipe comprises:
o a central lance (213) terminating in the terminal primary oxygen nozzle (216) which is in fluid connection with the central lance (213) and
o a surrounding annular passage (214) between the lateral surface of the inner oxygen supply pipe (210) and the central lance (213), said surrounding annular passage being in fluid connection with the lateral primary oxygen nozzles (212).

10. Burner according to claim 9, further comprising an oxygen distributor (240) in separate fluid connection with the central lance (213) and with the surrounding annular passage (214), said oxygen distributor comprising means for connecting the oxygen distributor (240) to an oxygen source and being adapted for controlling the ratio between the primary oxygen flow into the central lance (213) and into the surrounding annular passage (214).

11. Furnace comprising furnace walls defining a combustion chamber, at least one burner according to any one of claims 1 to 10 being mounted in a furnace wall so that the outlet face (120) of the burner block (100) faces the combustion chamber and so that the inlet face (110) of the burner block (100) is accessible from outside the combustion chamber.

12. Furnace according to claim 11, selected from tunnel kilns and furnaces, passage kilns, boilers, rotary kilns and furnaces and tank furnaces.

13. Use of the burner according to any one of claims 1 to 10 for combusting particulate solid fuel in a combustion zone of a furnace to produce heat therein.

14. Use according to claim 13 for combusting pulverized coal.

15. Use according to claim 13 or 14 in a furnace for the production of hydraulically setting binder.
